# EUROPÄISCHE PATENTSCHRIFT

(11) **EP 3 427 344 B1**
(45) Veröffentlichungstag und Bekanntmachung des Hinweises auf die Patenterteilung: **06.07.2022**
(21) Anmeldenummer: 16822163.8
(22) Anmeldetag: 22.12.2016
(51) Int. Cl.: H02G 3/08, H01R 13/506, H01R 13/52, H05K 5/00, H02G 15/113

(54) **GEHÄUSE MIT DECKEL FÜR KABELSCHUH**
HOUSING HAVING A COVER FOR A CABLE TERMINAL
BOÎTIER AVEC COUVERCLE POUR COSSE DE CÂBLE

(30) Priorität: 08.03.2016 DE 102016104140
(43) Veröffentlichungstag der Anmeldung: 16.01.2019
(73) Patentinhaber: Auto-Kabel Management GmbH, 79688 Hausen i.W. (DE)
(72) Erfinder: LIENERT, Dipl.-Ing. Andreas, 41844 Wegberg-Arsbeck (DE); ATTARZADEH, Amir, 41179 Mönchengladbach (DE); BODEM, Ralf, 40670 Meerbusch (DE)
(74) Vertreter: Cohausz & Florack
(86) Internationale Anmeldenummer: PCT/EP2016/082311
(87) Internationale Veröffentlichungsnummer: WO 2017/153019

(56) Entgegenhaltungen:
- EP-A1- 1 860 748
- EP-A2- 0 455 172
- EP-A2- 1 168 903
- WO-A1-2015/156370
- DE-A1- 3 603 915
- DE-A1-102007 003 697
- US-A- 3 335 774
- US-A- 3 977 563
- US-A- 5 574 254
- US-A1- 2003 000 720

## Beschreibung

Der Gegenstand betrifft ein Gehäuse mit einem nach einer Seite offenen Grundkörper mit vier Außenwänden und einem Boden, zumindest zwei Kabeleinführungen und einem Deckel mit einer Innenseite und einer Außenseite.

Im Bereich des Automobilbaus ist die elektrische Verkabelung sicherheitsrelevant. Da Fahrzeuge in der Regel sich verändernden Umweltbedingungen ausgesetzt sind, wie Regen, Spritzwasser, Streusalz, starke Temperaturschwankungen und dergleichen, sind elektrische Verbindungen stets Fehlerquellen im Hinblick auf Korrosion. Insbesondere bei Batterieleitungen, welche dauerhaft mit dem Batteriepluspotenzial belegt sind, kann Kontaktkorrosion durch die an der Leitung anliegende Spannung gefördert werden.

Verbindungen zwischen zwei elektrischen Leitungen werden in der Regel über einen Kabelschuh und entsprechende Verschraubungen realisiert. Hierbei ist es wichtig, dass die Verbindungsstelle gegenüber eindringender Feuchtigkeit geschützt ist. Dies wird heutzutage in der Regel durch einen Schrumpfschlauch realisiert, welcher über die Verbindungsstelle gelegt ist und anschließend verschrumpft wird. Ein solcher Schrumpfschlauch ist jedoch problematisch im Hinblick auf Längswasser, welches zwischen Schrumpfschlauch und Kabelisolation kriecht. Eine vollständige Abdichtung ist hier kaum erreichbar.

Insbesondere bei Batteriekabeln oder anderen Hochvoltanwendungen in der Kraftfahrzeugindustrie ist auch die sogenannte Wattiefe ein relevantes Kriterium. Fahrzeuge können nur bis zu einer bestimmten Tiefe in Wasser eintauchen. Diese Tiefe nennt sich Wattiefe und ist auch bestimmt durch die Lage von elektrischen Leitungen und der Batterie. Eine Unterflurverlegung von Batterieleitungen führt dazu, dass die Wattiefe von Fahrzeugen sehr gering ist. Insbesondere besteht die Gefahr, dass beim Eintauchen von unterflurverlegten elektrischen Leitungen in Wasser diese dauerhaft Schaden nehmen können.

Die EP 1 168 903 A2 offenbart eine Gehäuseeinheit für elektrische Komponenten zum Einsatz im Kraftfahrzeugbereich, mit einem Gehäuseteil, das durch einen Gehäusedeckel abgedichtet verschließbar ist, wobei das Gehäuseteil oder der Gehäusedeckel ein nach außen gerichtetes, elektrisches Anschlusselement aufweist. Die DE 36 03 915 A1 offenbart eine Erfindung, die sich vorzugsweise auf ein Gerätegehäuse für eine quaderförmige Flachbaugruppe mit einem becherförmigen Unterteil bezieht.

US 5 574 254 A offenbart ein Leitungsgehäuse gemäß dem Oberbegriff von Anspruch 1.

Aus diesem Grunde lag dem Gegenstand die Aufgabe zu Grunde, die Verbindung zwischen zwei elektrischen Leitungen innerhalb eines Kraftfahrzeugs gegenüber Feuchtigkeit zu schützen.

Diese Aufgabe wird gegenständlich durch ein Gehäuse nach Anspruch 1 gelöst.

Es ist erkannt worden, dass durch ein die Verbindungsstelle umgebendes Gehäuse mit einem entsprechenden Deckel eine ausreichende Absicherung gegenüber eindringendem Wasser gewährleistet werden kann. Dies wird gegenständlich dadurch erreicht, dass auf einer Deckelinnenseite eine Nut vorhanden ist. Die Nut ist durch zwei Nutstege nach außen begrenzt. Insbesondere entspricht der Abstand der Nutstege in der Regel in etwa der Materialstärke der Außenwände des Grundkörpers. Vorzugsweise verläuft die Nut umlaufend um den Deckel herum.

Sobald der Deckel auf den Grundkörper aufgesetzt wird, kann dieser mit dem Grundkörper verrasten, wie nachfolgend noch beschrieben werden wird. In einem verbundenen Zustand werden die an der offenen Seite liegenden Außenkanten der Außenwände in der Nut aufgenommen. Durch eine geeignete Ausgestaltung der Nutstege können sich diese bei der Aufnahme elastisch verformen und somit eine Abdichtung gegenüber den Außenwänden bewirken.

Durch das Aufsetzen des Deckels auf den Grundkörper dringen die Außenwände in die Nut ein. Hierbei werden die Nutstege, zumindest jedoch einer der Nutstege vom Inneren der Nut nach außen elastisch verformt. Die hierdurch auftretenden Kräfte wirken gegen die Außenwände und führen zu einem Abdichten. Der Deckel verschließt somit den Grundkörper wasserdicht.

Gemäß einem Ausführungsbeispiel wird vorgeschlagen, dass die Materialstärke der Nutstege zueinander unterschiedlich ist. Insbesondere kann der innere Nutsteg breiter sein als der äußere Nutsteg. Es ist jedoch auch möglich, dass der äußere Nutsteg breiter ist als der innere Nutsteg. Vorzugsweise wird durch die verschiedenen Materialstärken der Nutstege bewirkt, dass der jeweils dünnere Nutsteg eher elastisch verformt wird als der jeweils breitere Nutsteg. Ist der äußere Nutsteg dünner als der innere Nutsteg, so erfolgt die elastische Verformung zunächst vorzugweise am äußeren Nutsteg, sodass dieser bereits eine Abdichtung an den Außenwänden bewirkt. Ein innerer Nutsteg ist derjenige Nutsteg, der dem Zentrum des Deckels zugewandt ist, wohingegen ein äußerer Nutsteg derjenige Nutsteg ist, der vom Zentrum des Deckels abgewandt ist.

Gemäß einem Ausführungsbeispiel wird vorgeschlagen, dass ein an der Innenseite des Deckels innerer Nutsteg nach innen geneigt aus der Innenseite herausragt. Die Innenseite des Deckels ist diejenige Seite, die die Nut aufweist. Insbesondere wird der Deckel mit seiner Innenseite auf den Grundkörper aufgesetzt. Durch eine leichte Neigung des inneren Nutstegs nach innen wird einerseits das Aufsetzen der Nut auf die Außenkante erleichtert und andererseits wird erreicht, dass die Abdichtung verbessert wird.

Die Verbesserung der Aufnahme der Außenkante in der Nut wird auch dadurch erleichtert, dass ein an der Innenseite des Deckels äußerer Nutsteg nach außen geneigt aus der Innenseite herausragt. Die Nutstege ragen jeweils aus der Innenseite heraus. Jedoch ist erkannt worden, dass es vorteilhaft sein kann, wenn die Nutstege zueinander divergierend aus der Innenseite herausragen, insbesondere v-förmig aus der Innenseite herausragen. Dies erleichtert enorm die Aufnahme der Außenkanten beim Zusammensetzen des Grundkörpers mit dem Deckel. Außerdem wird die elastische Verformung so beeinflusst, dass eine möglichst gute Abdichtung erzielt wird.

Um den Deckel verliersicher an dem Grundkörper anzuordnen, wird der Deckel vorzugsweise im verbundenen Zustand mit dem Grundkörper verrastet. Hierzu können an den Nutstegen jeweils in Richtung der Nut weisende Hinterschnitte beziehungsweise Rastnasen vorgesehen sein. Korrespondierend hierzu kann an den Außenwänden des Grundkörpers jeweils ein entsprechender Hinterschnitt beziehungsweise eine entsprechende Vertiefung vorgesehen sein. Diese sind vorzugsweise umlaufend entsprechend der Hinterschnitte beziehungsweise Rastnasen an den Nutstegen. Auch ist es möglich, dass an den Nutstegen ein Gewinde vorgesehen ist, welches mit einem Gewinde am Grundkörper korrespondiert.

Besonders vorteilhaft ist, wenn der innere Nutsteg an seiner nach außen weisenden Seite einen Hinterschnitt oder eine Rastnase aufweist. In diese können an der Innenseite der Außenwände vorgesehene Hinterschnitte beziehungsweise Vorsprünge interagieren, sodass im verbundenen Zustand der Deckel in dem Grundkörper beziehungsweise den Außenflächen des Grundkörpers verrastet.

Durch die elastische Verformung der Nutstege wird erreicht, dass eine ausreichende Abdichtung zwischen Grundkörper und Deckel gewährleistet ist. Dies führt dazu, dass der Deckel und der Grundkörper aus einem gleichen Material gebildet sein können, was sich von bekannten Lösungen unterscheidet. Insbesondere sind das Material des Deckels und des Grundkörpers ein Kunststoff, insbesondere PVC, PE, PC oder PET.

In automobilen Anwendungen sind elektrische Komponenten stets hohen Temperaturschwankungen ausgesetzt. Die notwendige Elastizität zur Abdichtung des Deckels muss durch das Material in einem Temperaturbereich von vorzugsweise - 30 Grad Celsius bis + 180 Grad Celsius gewährleistet sein. Das Material von Deckel und Grundkörper ist dabei vorzugsweise temperaturbeständig bis 180 Grad.

Die Abdichtung durch den gegenständlichen Deckel ist spritzwasserdicht bis zu einem Wasserdruck von 80bar. Vorzugsweise wird diese Dichtigkeit auch bei Temperaturen von ca. 80°C erreicht.

Gemäß einem Ausführungsbeispiel wird vorgeschlagen, dass der Deckel samt seiner Nutstege einstückig gebildet ist. Insbesondere kann der Deckel ein Spritzgussteil sein.

Gemäß der Erfindung wird vorgeschlagen, dass im verbundenen Zustand der Deckel im Bereich der Nut an drei Innenflächen der Nut mit der Außenkante und der Außenwand in Kontakt ist. Die Form der Nut ist so gestaltet, dass im verbundenen Zustand sowohl vorzugsweise der Nutgrund als auch die beiden Nutstege jeweils in Kontakt mit der Außenkante beziehungsweise der Außenwand sind, sodass an drei Kontaktflächen zwischen Deckel und Grundkörper eine Abdichtung erfolgt. Hierdurch wird eine besonders gute Wasserdichtigkeit erzielt.

Gemäß einem Ausführungsbeispiel wird vorgeschlagen, dass im Nutgrund ein vorzugsweise umlaufender Dichtstreifen vorgesehen ist. Der Dichtstreifen ist vorzugsweise aus einem anderen Material als der Deckel. Insbesondere ist der Dichtstreifen zusammen mit dem Deckel in einem Spritzgussverfahren hergestellt worden. Der Dichtstreifen und der Deckel sind vorzugsweise in einem 2 Komponenten (2K) Spritzguss hergestellt. Der Dichtstreifen ist vorzugsweise aus einem Silikon gebildet. Der Deckel ist vorzugsweise aus einem Hartmaterial und der Dichtstreifen aus einem Weichmaterial. Insbesondere sind die E Module von Hartmaterial und Dichtstreifen voneinander verschieden.

Gemäß einem Ausführungsbeispiel wird vorgeschlagen, dass im Grundkörper eine Aufnahme für einen Kabelschuh angeordnet ist. An dieser Aufnahme kann der Kabelschuh angeordnet werden und vorzugsweise mit einem zweiten Kabelschuh verschraubt werden, sodass eine elektrische Verbindung zwischen zwei Kabeln in dem Gehäuse hergestellt werden kann.

Die Kabel werden in das Gehäuse vorzugsweise über Kabeltüllen geführt. Die Kabeltüllen sind an den Kabeleinführungen abgedichtet.

Gemäß einem Ausführungsbeispiel wird vorgeschlagen, dass in dem Gehäuse zwei Kabelschuhe miteinander verschraubt sind.

Nachfolgend wird der Gegenstand an Hand einer Ausführungsbeispiele zeigenden Zeichnung näher erläutert. In der Zeichnung zeigen:
- Fig. 1: eine schematische Ansicht einer Verbindung zwischen zwei Kabelschuhen;
- Fig. 2: eine schematische Ansicht eines Grundkörpers;
- Fig. 3: eine schematische Ansicht eines Deckel;
- Fig. 4a: eine Schnittansicht durch einen Deckel im Bereich einer Nut;
- Fig. 4b: eine Schnittansicht einer Außenwand im Bereich einer Außenkante des Grundkörpers;
- Fig. 4c: eine Schnittansicht eines Deckels mit einem Grundkörper im verbundenen Zustand.

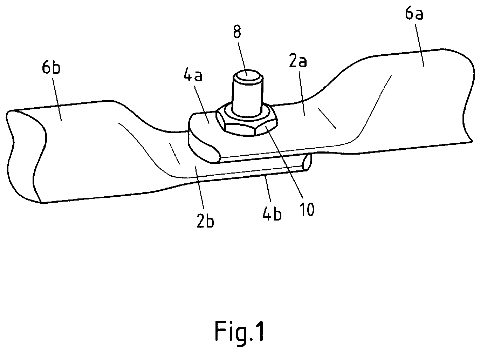

Figur 1 zeigt einen ersten Kabelschuh 2a sowie einen zweiten Kabelschuh 2b. Der erste Kabelschuh 2a ist vorzugsweise mit einer Durchgangsbohrung im Bereich einer Abflachung 4a versehen. In dem ersten Kabelschuh 2a ist ein vorzugsweise rundes elektrisches Kabel 6a angeschlossen.

Der zweite Kabelschuh 2b hat im Bereich seiner Abflachung 4b einen Gewindebolzen 8.

Auch der zweite Kabelschuh 2b ist mit einem elektrischen Kabel 6b elektrisch verbunden. Über eine Verschraubung mittels einer Schraube 10 wird entlang des Gewindebolzens 8 der erste Kabelschuh 2a mit dem zweiten Kabelschuh 2b verschraubt und eine elektrische Verbindung wird zwischen den Kabelschuhen hergestellt.

Es versteht sich, dass die gezeigte elektrische Verbindung rein beispielhaft ist und jedwede andere elektrische Verbindung zwischen zwei elektrischen Kabeln 6a, 6b ebenfalls umfasst sind. Solche elektrischen Verbindungen sind problematisch, da an der Verbindungsstelle eine Isolation aufgebrochen sein muss. Im Bereich dieser aufgebrochenen Isolation besteht jedoch stets die Gefahr der Korrosion.

Aus diesem Grunde ist eine elektrische Verbindung, wie sie beispielhaft in der Fig. 1 gezeigt ist, vor Korrosion zu schützen. Hierzu wird ein Grundkörper und ein Deckel, wie nachfolgend beschrieben, vorgeschlagen.

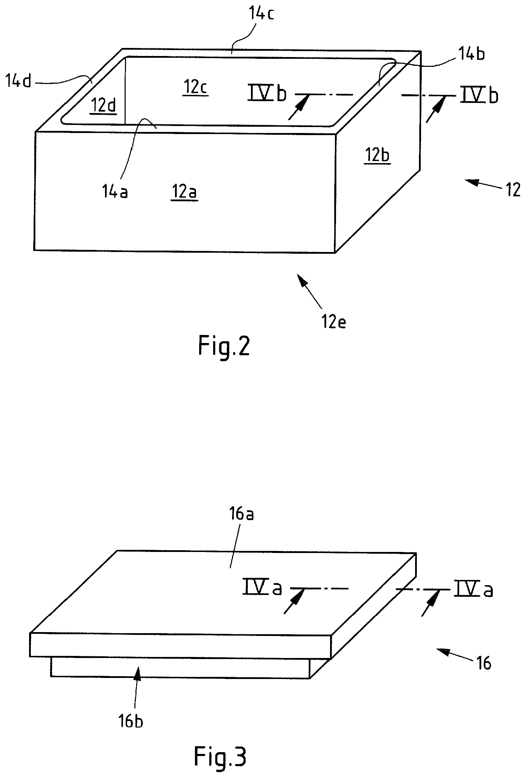

Figur 2 zeigt einen Grundkörper 12 eines Gehäuses. Der Grundkörper 12 hat vier Außenwände 12a-d sowie einen Boden 12e. Insbesondere ist der Grundkörper einstückig gebildet. Vorzugsweise ist der Grundkörper aus einem Spritzgusskunststoff gebildet. Die Außenwände 12a-d schließen an Außenkanten 14a-d ab.

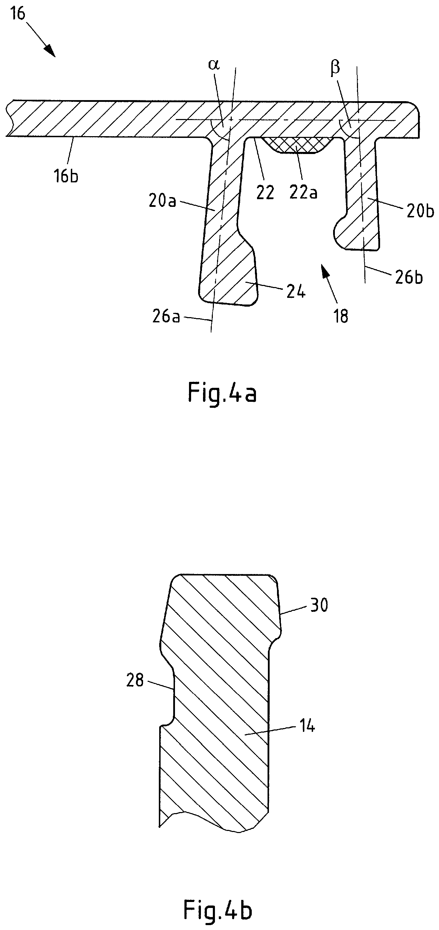

Ein Deckel 16 hat eine Außenseite 16a und eine Innenseite 16b. Die Innenseite 16b ist im verbundenen Zustand dem Grundkörper 12 zugewandt. Umlaufend um den Deckel 16 ist eine Nut vorgesehen, wie sie in der Figur 4a gezeigt ist.

Figur 4a zeigt einen Schnitt im Bereich einer Außenkante des Deckels 16. Zu erkennen in der Figur 4a ist, dass an der Innenseite 16b des Deckels 16 eine Nut 18 vorgesehen ist. Die Nut 18 hat einen ersten Nutsteg 20a und einen zweiten Nutsteg 20b. Der erste Nutsteg 20a ist am Deckel 16 innenliegend, das heißt er ist dem Zentrum des Deckels 16 zugewandt und der zweite Nutsteg 20b ist am Deckel 16 außenliegend, das heißt dem Zentrum des Deckels 16 abgewandt.

Der Deckel 16 kann mit dem äußeren Nutsteg 20b abschließen, es kann jedoch auch eine Verblendung vorgesehen sein.

In der Nut 18 ist ein Nutboden 22 vorgesehen. An dem Nutboden 22 ist ein Vorsprung 22a vorgesehen. Der Vorsprung 22a ist vorzugsweise aus einer Materialverstärkung des Deckels 16 gebildet.

Der Vorsprung 22a kann als Dichtung umlaufend in dem Nutboden 22 vorgesehen sein. Der Vorsprung 22a ist vorzugsweise aus einem anderen, vorzugsweise weicherem Material als der Deckel 16 bzw. die Nutstege 20a, 20b gebildet. Insbesondere ist das Material des Vorsprungs 22a zusammen mit dem Material des Deckels in einem 2K Spritzgussverfahren vergossen worden. Das Material des Vorsprungs 22a ist bevorzugt ein Silikon. Das Material des Deckels ist bevorzugt aus einem Thermoplast, insbesondere Polybutylenterephthalat (PBT) gebildet.

An einem längsseitigen Ende des Nutstegs 20a ist eine Rastnase 24 vorgesehen. Die Rastnase 24 ist vom Zentrum des Deckels 16 nach außen weisend gebildet.

Ferner ist zu erkennen, dass der Nutsteg 20a mit seiner Längsachse 26a um den Winkel α in Richtung des Zentrums des Deckels 16 geneigt ist. Auf der anderen Seite ist der Nutsteg 20b entlang seiner Längsachse 26b um den Winkel β gegenüber der Ebene des Deckels 16 nach außen geneigt.

Korrespondierend zu der Nut 18 sind die Außenkanten 14 gebildet, wie in Fig. 4b gezeigt. Im Bereich des längsseitigen Endes der Außenkante 14 ist ein Hinterschnitt 28 vorgesehen, der zu der Rastnase 24 korrespondiert. Ferner ist ein Vorsprung 30 vorgesehen, an dem der äußere Nutsteg 20b zur Anlage kommt.

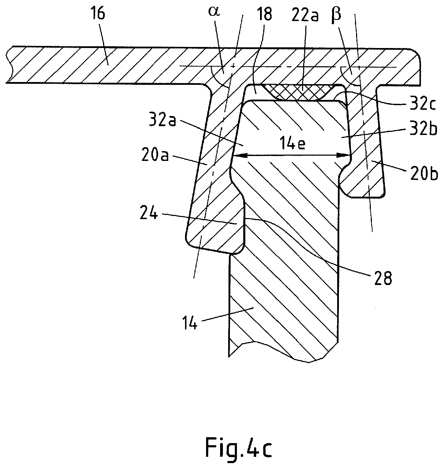

Im verbundenen Zustand, wie er in der Figur 4c dargestellt ist, ist die Außenkante 14 in der Nut 18 verrastet. Hierbei ist die Dimensionierung des Abstandes zwischen den Nutstegen 20a, 20b im Verhältnis zur Breite 14e der Außenkante 14 so gewählt, dass im verbundenen Zustand die Nutstege 20a, 20b elastisch nach außen verformt sind. Hierbei werden die Winkel α und β verkleinert.

Durch die elastische Verformung der Nutstege 20a, 20b wird der Nutsteg 20a in Richtung des Zentrums des Deckels 16 gedrückt und der äußere Nutsteg 20b vom Zentrum des Deckels 16 weggedrückt.

Hierdurch entsteht eine Kraft durch die Nutstege 20a, 20b, welche auf die Außenfläche der Außenkante 14 wirkt. Dadurch kommt es zu Kontaktflächen 32a und 32b. An der Kontaktfläche 32a liegt der Nutsteg 20a an der Innenseite der Außenkante 14 an.

An der Kontaktstelle 32b, welche im Bereich des Vorsprungs 30 ist, liegt der äußere Nutsteg 20b an der Außenfläche der Außenkante 14 an.

Ferner hintergreift im verbundenen Zustand die Rastnase 24 den Hinterschnitt 28, sodass der Deckel 16 verliersicher an dem Grundkörper 12 gehalten ist. Außerdem wird durch das Verrasten der Rastnase 24 in dem Hinterschnitt 28 eine Anpresskraft entlang der Längsachse der Außenkante 14 in Richtung des Vorsprungs 22a bewirkt, sodass auch hier eine Kontaktfläche 32c zwischen Deckel 16 und Außenkante 14 gebildet wird.

Durch die Kontaktflächen 32a-c wird eine Abdichtung an drei Stellen zwischen dem Deckel und Außenkante bewirkt, sodass das Gehäuse gut vor eindringendem Wasser geschützt ist.

### Bezugszeichenliste

- 2a, b: Kabelschuh
- 4a, b: Abflachung
- 6a, b: Kabel
- 8: Gewindebolzen
- 10: Schraube
- 12: Grundkörper
- 12a-d: Außenwände
- 14: Außenkanten
- 16: Deckel
- 16a: Außenseite
- 16b: Innenseite
- 18: Nut
- 20a, b: Nutsteg
- 22: Nutboden
- 22a: Vorsprung
- 24: Rastnase
- 26a, b: Längsachse
- 28: Hinterschnitt
- 30: Vorsprung
- 32a-c: Kontaktflächen

## Patentansprüche

1. Leitungsgehäuse mit
- einem nach einer Seite offenen Grundkörper (12) mit vier Außenwänden (12a-d) und einem Boden,
- zumindest zwei Kabeleinführungen und
- einem Deckel (16) mit einer Innenseite (16b) und einer Außenseite (16a), wobei
- der Deckel (16) an seiner Innenseite (16b) eine Nut (18) mit einem Nutgrund und zwei die Nut (18) begrenzenden Nutstegen (20a, b) aufweist, derart,
- dass im verbundenen Zustand zwischen Deckel (16) und Grundkörper (12) die an der offenen Seite liegenden Außenkanten (14) der Außenwände (12a-d) in der Nut (18) aufgenommen sind, derart, dass zumindest einer der Nutstege (20a, b) elastisch verformt ist und somit gegenüber den Außenwänden (12a-d) abdichtend wirkt,
- dass im Nutgrund ein Dichtstreifen angebracht ist,
- das der Dichtstreifen und der Deckel in einem Zwei-Komponenten-Spritzguss hergestellt sind, **dadurch gekennzeichnet,**
- **dass** im verbundenen Zustand der Nutgrund (22a) und die Nutstege(20a, b) des Deckels (16) jeweils in Kontakt mit der Außenkante der Außenwand sind .

2. Leitungsgehäuse nach Anspruch 1,
**dadurch gekennzeichnet,**
- **dass** der an der Innenseite (16b) des Deckels (16) innere Nutsteg (20a) breiter ist als der äußere Nutsteg (20b).

3. Leitungsgehäuse nach Anspruch 1 oder 2,
**dadurch gekennzeichnet,**
- **dass** der an der Innenseite (16b) des Deckels (16) innere Nutsteg (20a) nach innen geneigt aus der Innenseite (16b) heraus ragt.

4. Leitungsgehäuse nach einem der vorangehenden Ansprüche,
**dadurch gekennzeichnet,**
- **dass** der an der Innenseite (16b) des Deckels (16) äußere Nutsteg (20b) nach außen geneigt aus der Innenseite (16b) heraus ragt.

5. Leitungsgehäuse nach einem der vorangehenden Ansprüche,
**dadurch gekennzeichnet,**
- **dass** der an den Innenseite (16b) des Deckels (16) innere Nutsteg (20a) einen an seiner nach außen weisenden Seite einen Hinterschnitt (28) und/oder eine Rastnase (24) aufweist.

6. Leitungsgehäuse nach einem der vorangehenden Ansprüche,
**dadurch gekennzeichnet,**
- **dass** das Material von Deckel (16) und/oder Grundköper temperaturbeständig bis 180°C ist.

7. Leitungsgehäuse nach einem der vorangehenden Ansprüche,
**dadurch gekennzeichnet,**
- **dass** der Deckel (16) samt seiner Nutstege (20a, b) einstückig gebildet ist.

8. Leitungsgehäuse nach einem der vorangehenden Ansprüche,
**dadurch gekennzeichnet,**
- **dass** im Grundkörper (12) eine Aufnahme für einen Kabelschuh (2a, b) angeordnet ist.

9. Leitungsgehäuse nach einem der vorangehenden Ansprüche,
**dadurch gekennzeichnet,**
- **dass** die Kabeleinführungen als Kabeltüllen gebildet sind.

10. Leitungsgehäuse nach einem der vorangehenden Ansprüche,
**dadurch gekennzeichnet,**
- **dass** das Gehäuse zwei miteinander verschraubte Kabelschuhe (2a, b) aufweist.

## Claims

1. Cable housing having
- a base body (12) open to one side with four outer walls (12a-d) and a base,
- at least two cable infeeds and
- a lid (16) with an inside (16b) and an outside (16a), wherein
- the lid (16) has, on its inside (16b), a groove (18) with a groove base and two groove webs (20a, b) delimiting the groove (18) such that
- in the connected state between lid (16) and base body (12), the outer edges (14) arranged at the open side of the outer walls (12a-d) are received in the groove (18) such that at least one of the groove webs (20a, b) is elastically deformed and thus acts in a sealing manner with respect to the outer walls (12a-d),
- that in the groove base a sealing strip is arranged,
- that the sealing strip and the lid are made from two component molding, **characterised in that**
- the groove base (22a) and the groove webs (12a-d) of the lid are, in the connected state, in contact with the outer edge of the outer wall.

2. Housing according to claim 1,
**characterised in that**
- an the inner groove web (20a) on the inside (16b) of the lid (16) is wider than the outer groove web (20b).

3. Cable housing according to claim 1 or 2,
**characterised in that**
- the inner groove web (20a) on the inside (16b) of the lid (16) protrudes from the inside (16) inclined inwards.

4. Cable housing according to any one of the preceding claims,
**characterised in that**
- the outer groove web (20b) on the inside (16b) of the lid (16) protrudes from the inside (16b) inclined outwards.

5. Cable housing according to any one of the preceding claims,
**characterised in that**
- the inner groove web (20a) on the inside (16b) of the lid (16) has at its side pointing outwards an undercut (28) and/or a locking tab (24).

6. Cable housing according to any one of the preceding claims,
**characterised in that**
- the material of the lid )16) and/or base body is temperature-resistant up to 180°C.

7. Cable housing according to any one of the preceding claims,
**characterised in that**
- the lid (16) is formed together with its groove webs (20a, b) in one piece.

8. Cable housing according to any one of the preceding claims,
**characterised in that**
- a receptacle for a cable lug (2a, b) is arranged in the base body (12).

9. Cable housing according to any one of the preceding claims,
**characterised in that**
- the cable infeeds are formed as cable sleeves.

10. Cable housing according to any one of the preceding claims,
**characterised in that**
- the housing comprises two cable lugs (2a, b) that are screwed together.

## Revendications

1. Boîtier de conduite
- avec un corps de base (12) ouvert sur un côté, avec quatre parois extérieures (12a-d) et
- avec un fond,
- avec au moins deux entrées de câbles et
- avec un couvercle (16) avec un côté intérieur (16b) et un côté extérieur (16a),
- le couvercle (16) présentant au niveau de son côté intérieur (16b) une rainure (18) avec un fond de rainure et deux nervures de rainure (20a, b) délimitant la rainure (18), de telle sorte
- que, dans l'état relié entre le couvercle (16) et le corps de base (12), les arêtes extérieures (14) des parois extérieures (12a-d) situées au niveau du côté ouvert sont logées dans la rainure (18), de telle sorte qu'au moins l'une des nervures de rainure (20a, b) est déformée élastiquement et agit ainsi de manière étanche par rapport aux parois extérieures (12a-d),
- qu'une bande d'étanchéité est placée au fond de la rainure,
- que la bande d'étanchéité et le couvercle sont fabriqués par un moulage par injection à deux composants,
**caractérisé**
- **en ce que**, à l'état assemblé, le fond de rainure (22a) et les nervures de rainure (20a, b) du couvercle (16) sont respectivement en contact avec l'arête extérieure de la paroi extérieure.

2. Boîtier de conduite selon la revendication 1,
**caractérisé**
**en ce que** la nervure de rainure (20a) intérieure au côté intérieur (16b) du couvercle (16) est plus large que la nervure de rainure extérieure (20b).

3. Boîtier de conduite selon la revendication 1 ou 2,
**caractérisé**
**en ce que** la nervure de rainure (20a) intérieure au côté intérieur (16b) du couvercle (16) dépasse du côté intérieur (16b) en étant inclinée vers l'intérieur.

4. Boîtier de conduite selon l'une des revendications précédentes,
**caractérisé**
**en ce que** la nervure de rainure (20b) extérieure au côté intérieur (16b) du couvercle (16) dépasse du côté intérieur (16b) en étant inclinée vers l'extérieur.

5. Boîtier de conduite selon l'une des revendications précédentes,
**caractérisé**
**en ce que** la nervure de rainure (20a) intérieure au côté intérieur (16b) du couvercle (16) présente une contre-dépouille (28) et/ou un ergot d'arrêt (24) sur son côté tourné vers l'extérieur.

6. Boîtier de conduite selon l'une des revendications précédentes,
**caractérisé**
**en ce que** le matériau du couvercle (16) et/ou du corps de base est résistant à la température jusqu'à 180°C.

7. Boîtier de conduite selon l'une des revendications précédentes,
**caractérisé**
**en ce que** le couvercle (16) et ses rainures (20a, b) sont formés d'une seule pièce.

8. Boîtier de conduite selon l'une des revendications précédentes,
**caractérisé**
**en ce qu'**un logement pour une cosse de câble (2a, b) est disposé dans le corps de base (12).

9. Boîtier de conduite selon l'une des revendications précédentes,
**caractérisé**
**en ce que** les entrées de câble sont formées comme des passe-câbles.

10. Boîtier de conduite selon l'une des revendications précédentes,
**caractérisé**
**en ce que** le boîtier présente deux cosses de câble (2a, b) vissées l'une à l'autre.
